**Europäisches Patentamt**

**European Patent Office**

**Office européen des brevets**

(19)

(11) Veröffentlichungsnummer: **0 073 350**
**B1**

(12) # EUROPÄISCHE PATENTSCHRIFT

(45) Veröffentlichungstag der Patentschrift:
02.04.86

(51) Int. Cl.⁴: **B 60 J 1/00,** E 06 B 3/56

(21) Anmeldenummer: **82106890.5**

(22) Anmeldetag: **30.07.82**

(54) Verfahren zum Herstellen einer Glasscheibe mit einem umlaufenden Profilrahmen.

(30) Priorität: **31.08.81 DE 3134340**

(43) Veröffentlichungstag der Anmeldung:
**09.03.83 Patentblatt 83/10**

(45) Bekanntmachung des Hinweises auf die Patenterteilung:
**02.04.86 Patentblatt 86/14**

(84) Benannte Vertragsstaaten:
**BE DE FR IT**

(56) Entgegenhaltungen:
**DE - A - 1 755 370**
**US - A - 4 115 609**

(73) Patentinhaber: **VEGLA Vereinigte Glaswerke GmbH, Viktoria Allee 3-5, D-5100 Aachen (DE)**

(72) Erfinder: **Kunert, Heinz, Dr., Am Krielerdom 23, D-5000 Köln 41 (DE)**

(74) Vertreter: **Biermann, Wilhelm, Dr.-Ing. et al, VEGLA Vereinigte Glaswerke GmbH Viktoriaallee 3-5, D-5100 Aachen (DE)**

ACTORUM AG

**Beschreibung**

Die Erfindung betrifft ein Verfahren zum Herstellen einer mit einem umlaufenden Profilrahmen versehenen, für die Verklebung mit dem Rahmen einer Fensteröffnung einer Fahrzeugkarosserie bestimmten Autoglasscheibe mit hoher Massgenauigkeit des Profilrahmens, die mit Hilfe eines zusätzlichen Kleberstrangs mit dem Rahmen der Fensteröffnung verklebt wird.

Es ist bekannt, auf den Scheibenumfang einer Fahrzeugscheibe einen plastisch deformierbaren Profilstrang aufzubringen (US-A-4 115 609, DE-A-1 755 370). Bei diesem bekannten Verfahren besteht der Profilstrang aus einer plastisch verformbaren Klebermasse, die ganz oder teilweise mit einer Metallfolie umgeben ist. Der Profilstrang dient hierbei unmittelbar als Klebe- bzw. Verbindungselement zwischen dem Randbereich der Glasscheibe und dem Befestigungsflansch des Fensterrahmens. Die Verformung des Profilstrangs erfolgt im Augenblick des Einbaus der Glasscheibe, wobei die Klebermasse entsprechend den jeweiligen Toleranzen der Glasscheibe und des Fensterrahmens seitlich ausweicht. Bei diesem bekannten Verfahren verbleibt zwischen den Umfangsflächen der Glasscheibe und dem diesen gebenüber liegenden Flansch des Fensterrahmens ein gegebenenfalls mit der Klebermasse ausgefüllter Spalt, der durch ein zusätzliches Zierprofil abgedeckt werden muss.

Demgegenüber liegt der Erfindung die Aufgabe zugrunde, bei einer für die direkte Verklebung mit dem Befestigungsflansch des Fensterrahmens vorgesehenen Autoscheibe die Aussenabmessungen einer mit einem Rahmen umgebenen Autoglasscheibe den jeweiligen Abmessungen des zugehörigen Fensterrahmens der Autokarosserie so anzupassen, dass die nachträgliche Anbringung von Abdeckprofilen zur Überbrückung des Spalts zwischen Glasscheibe und Fensterrahmenflansch überflüssig wird, und dass eine sichere Abstützung der Glasscheiben während der Aushärtephase des Kleberstrangs ohne zusätzliche Abstands- oder Stützelemente gewährleistet ist.

Gemäss der Erfindung wird diese Aufgabe dadurch gelöst, dass die Glasscheibe mit einem einen U-förmigen auf den Randbereich der Glasscheibe aufgeschobenen Profilabschnitt und einen ausserhalb des Umfangs der Glasscheibe angeordneten Profilabschnitt aufweisenden Profilrahmen versehen wird, dessen ausserhalb des Umfangs der Glasscheibe liegender Profilabschnitt aus plastisch verformbarem Werkstoff besteht, und dass mit Hilfe einer Rahmenpressvorrichtung der ausserhalb des Umfangs der Glasscheibe liegende Profilabschnitt derart gezielt plastisch verformt wird, dass die kalibrierten Aussenabmessungen der umrahmten Glasscheibe den jeweiligen Abmessungen der Fensteröffnung entsprechen.

In Weiterbildung der Erfindung kann ein Profilrahmen verwendet werden, dessen ausserhalb des Umfangs der Glasscheibe liegender plastisch verformbarer Profilabschnitt aus einem Hohlprofilkörper mit einem metallischen Skelett und einem Überzug aus einem weichelastischen Werkstoff besteht.

Gemäss einer anderen Ausführungsform kann ein Profilrahmen zur Anwendung kommen, dessen ausserhalb des Umfangs der Glasscheibe liegender plastisch verformbarer Profilabschnitt aus einem thermoplastischen Werkstoff besteht, der unter gleichzeitiger Wärmeeinwirkung auf die kalibrierten Abmessungen plastisch verformt wird.

Nach dem erfindungsgemässen Verfahren hergestellte Glasscheiben werden zweckmässigerweise bereits im Herstellwerk der Glasscheiben mit dem Profilrahmen versehen, der damit während der weiteren Manipulation der Glasscheiben und während ihres Transports gleichzeitig als Kantenschutz dient. Vor dem Einbau in die Karosserieöffnung werden die Aussenabmessungen der umrahmten Glasscheiben auf das jeweils erforderliche Mass gebracht. Auf diese Weise kann zum Beispiel jede einzelne umrahmte Glasscheibe individuell den Abmessungen der Fensteröffnung angepasst werden, für die die Glasscheibe bestimmt ist.

Die erforderlichen Massnahmen zur Anpassung der Abmessungen können auch bei vollmechanisierter bzw. vollautomatischer Montage zur Anwendung kommen. Dabei werden die Ist-Werte der Abmessungen der Fensteröffnung von einer Messvorrichtung am Montageband aufgenommen, und nach diesen Istwerten die Rahmenpressvorrichtung eingestellt, so dass der nachgepresste Profilrahmen jeweils genau dem zugehörigen Fensterrahmen angepasst ist. Auf diese Weise erübrigen sich alle Distanz- und Stützelemente, da sich der Profilrahmen mit seinem auf das jeweils gewünschte Endmass gebrachten Abschnitt unmittelbar gegen den Fensterrahmenflansch abstützt. Der auf der Glasscheibe sitzende Profilrahmen stellt darüberhinaus einen Schutz dar, wodurch eventuelle Beschädigungen der Karosserielackierung bei Kontakt mit den Scheiben vermieden wird. Ausserdem wird, was insbesondere bei Verbundglasscheiben aus dünnen Einzelglasscheiben wichtig ist, die Bruchgefahr der Glasscheiben herabgesetzt, und die Verbundglasscheibe erhält durch den Profilrahmen insgesamt eine grössere Stabilität.

Der Profilrahmen kann entweder über einen U-förmig profilierten Abschnitt auf den Scheibenrand aufgeschoben werden, und durch Klemmwirkung auf der Glasscheibe befestigt sein. Zur Erhöhung der Klemmkräfte kann der U-förmig profilierte Teil eine federnde Einlage, beispielsweise eine skelettartige Einlage aus einem geschlitzten Blechstreifen aufweisen. Der Profilrahmen kann aber auch mit dem Glasscheibenrand verklebt werden.

Weitere Merkmale und Vorteile der Erfindung ergeben sich aus den Unteransprüchen und aus der nachfolgenden Beschreibung verschiedener Ausführungen anhand der Zeichnungen. Von den Zeichnungen zeigt

Fig. 1 eine erste Ausführungsform einer erfindungsgemäss umrahmten Glasscheibe in einem Schnitt durch den Randbereich der Glasscheibe;

Fig. 2 eine metallische, skelettartige deformierbare Einlage für einen erfindungsgemässen Profilrahmen;

Fig. 3 eine andere Ausführungsform eines Umrahmungsprofils nach der Erfindung;

Fig. 4 eine Ausführungsform eines erfindungsgemässen Umrahmungsprofils mit einem plastisch deformierbaren Vollprofilabschnitt;

Fig. 5 eine weitere Ausführungsform eines erfindungsgemässen Umrahmungsprofils mit einem in zwei Richtungen anpassbaren Profilabschnitt;

Fig. 6 die in der Ausführungsform nach Fig. 5 verwendete deformierbare Verstärkungseinlage;

Fig. 7 eine andere Ausführungsform einer deformierbaren metallischen Verstärkungseinlage für ein Umrahmungsprofil;

Fig. 8 eine schematische Darstellung des Presswerkzeugs und des Pressvorgangs zur Vergrösserung der Umfangsabmessungen einer umrahmten Glasscheibe, und

Fig. 9 eine schematische Darstellung eines Presswerkzeugs und des Pressvorgangs zum Verkleinern der Umfangsabmessungen einer umrahmten Glasscheibe.

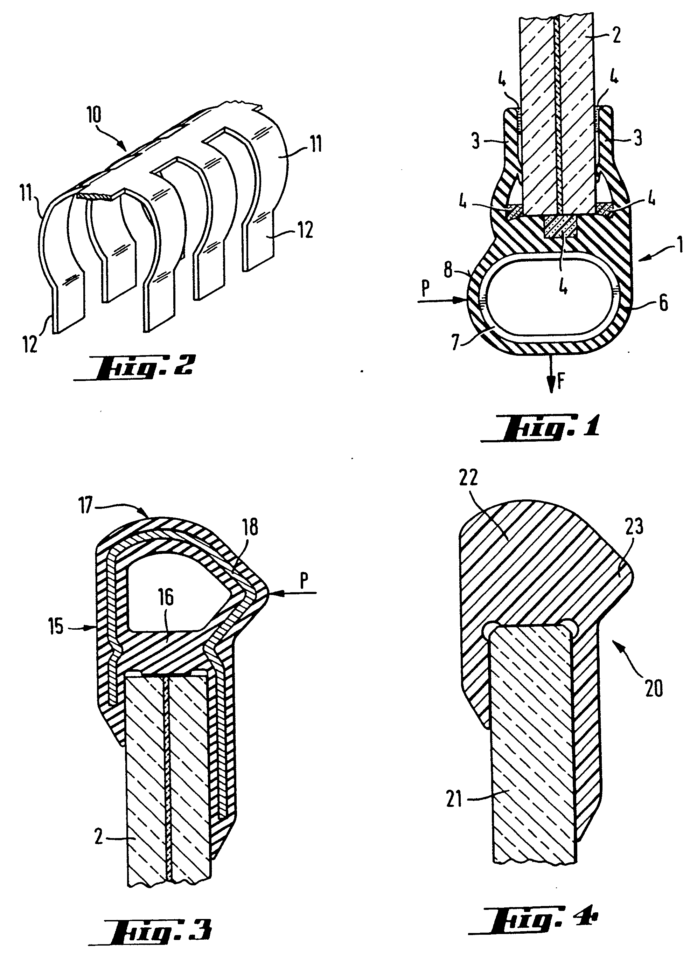

Bei der in Fig. 1 dargestellten Ausführungsform ist mit dem Rahmenprofil 1 eine Verbundglasscheibe 2 auf seinem Umfang umgeben. Das Rahmenprofil 1 weist einen U-förmig profilierten Abschnitt auf, dessen Schenkel 3 den Rand der Verbundglasscheibe 2 beidseitig fassen. Zur besseren Haftung und Abdichtung sind Kleberschichten 4 zwischen die Glasscheibe 2 und die Stege des Rahmenprofils zwischengeschaltet. Das Rahmenprofil 1 besteht aus einem weichelastischen kautschukartigen Material.

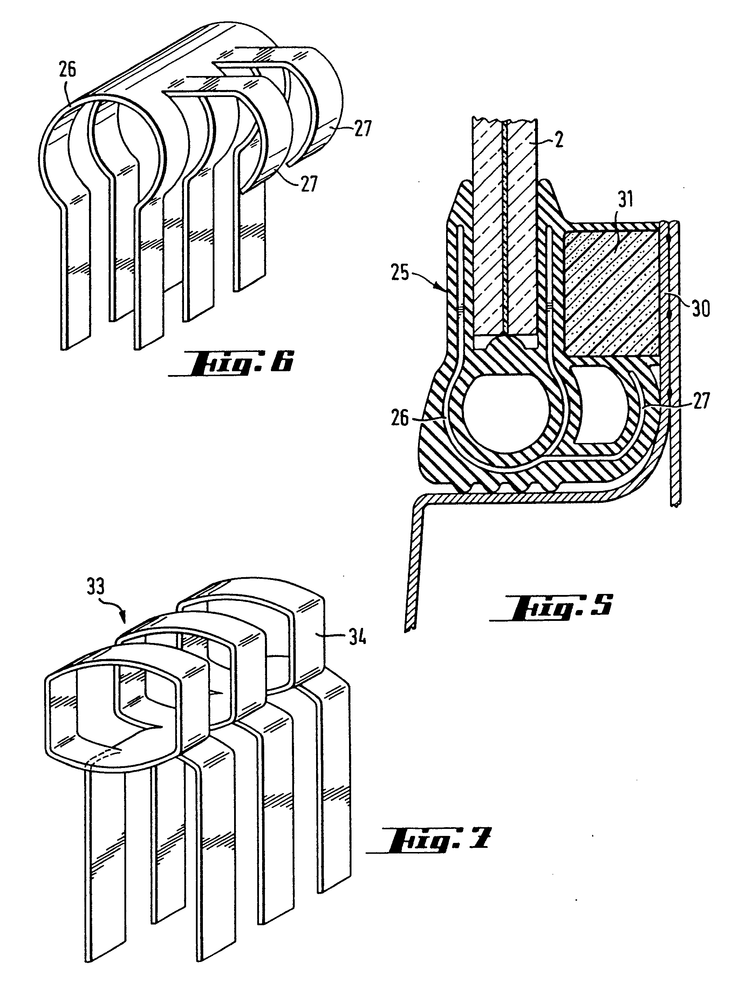

An dem Mittelsteg des Rahmenprofils 1 ist auf der der Glasscheibe 2 abgewandten Seite ein schlauchartiger Abschnitt 6 angeordnet, dessen Wand mit einer skelettartigen Verstärkungseinlage 7 armiert ist. Die Verstärkungseinlage 7 kann eine Metallspirale sein, oder ein entsprechend geformter geschlitzter Blechstreifen, etwa der Art, wie er in einer abgeänderten Ausführungsform in Fig. 2 dargestellt ist. Der schlauchartige Abschnitt 6 ist asymmetrisch geformt, und bildet auf einer Seite einen vorstehenden Wulst 8. Zum Anpassen der Aussenabmessungen der umrahmten Glasscheibe wird der Wulst 8 durch Einwirkung einer Druckkraft in Richtung des Pfeiles P so weit eingedrückt, und dadurch der schlauchartige Abschnitt 6 so weit in Richtung des Pfeiles F von der Kante der Glasscheibe weg erweitert, bis das gewünschte Aussenmass des Profilrahmens 1 erreicht ist.

Bei der in Fig. 2 dargestellten skelettartigen, plastisch verformbaren Verstärkungseinlage 10 handelt es sich um einen gestanzten Blechstreifen mit rund gebogenen Rippen 11. Die Rippen 11 sind jedoch nicht kreisförmig geschlossen, vielmehr sind die Endbereiche 12 der Rippen 11 abgewinkelt, und dienen als Verstärkungseinlage in den beiden U-Schenkeln des Rahmenprofils. Ein mit einer solchen Verstärkungseinlage armiertes Rahmenprofil weist eine erhöhte Klemmwirkung des U-förmig profilierten Abschnitts auf, so dass es gegebenenfalls ohne Zwischenschaltung eines Klebers allein durch Klemmwirkung auf der Glasscheibe befestigt werden kann.

Ein mit einer nach diesem Prinzip ausgebildeten Verstärkungseinlage versehenes Rahmenprofil ist das in Fig. 3 dargestellte Rahmenprofil 15. Es ist allein durch seine Klemmwirkung auf der Verbundglasscheibe 2 befestigt. Der ausserhalb des Mittelsteges 16 gegenüber der Schmalseite der Verbundglasscheibe 2 angeordnete Hohlprofilabschnitt 17 weist auf einer Seite einen Vorsprung 18 auf. Zum Zweck der Grössenanpassung der umrahmten Glasscheibe wird auf diesen Vorsprung 18 ein Kraft P ausgeübt, die den Hohlprofilabschnitt 17 in dem gewünschten Ausmass derart plastisch verformt, dass der Umfang des Profilrahmens die gewünschten Abmessungen annimmt.

In seiner einfachsten Form kann ein entsprechend der Fig. 3 aufgebautes Rahmenprofil aus einer in etwa im Querschnitt etwa U-förmigen Profilleiste aus Aluminiumblech bestehen, die innen und/oder aussen mit einer geeigneten Kunststoffschicht kaschiert ist.

Das in Fig. 4 dargestellte Rahmenprofil 20 weist zwar eine ähnliche Aussenkontur seines Querschnitts auf wie das in Fig. 3 dargestellte Rahmenprofil 15, doch ist sein Aufbau grundsätzlich verschieden. Es besteht nämlich aus einem Vollprofil aus Kunststoff. Zumindest in seinem ausserhalb der Schmalseite der Glasscheibe 21 liegenden Abschnitt 22 handelt es sich um einen thermoplastischen Kunststoff. Das Material des Vorsprungs 23 wird bei der endgültigen Kalibrierung durch Plastifizierung infolge Erwärmung und durch Einwirkung von Presswerkzeugen auf dem Vorsprung 23 verdrängt, und dient zur Vergrösserung des äusseren Profilrahmenumfangs.

Fig. 5 zeigt in Verbindung mit Fig. 6 ein weiteres Ausführungsbeispiel, bei dem das Rahmenprofil 25 mit einer skelettartigen Verstärkungseinlage 26 armiert ist, die zusätzlich seitlich herausragende verformbare Rippen 27 aufweist, die als Abstandshalter dienen, um den Abstand zur Zarge 30 des Fensterrahmens festzulegen. Oberhalb dieser als Abstandshalter dienenden Rippen 27 ist ein mit einer Klebemasse 31 gefüllter Profilabschnitt angeordnet, die die Klebeverbindung zwischen dem Rahmenprofil 25 und der Zarge 30 übernimmt.

Die in der Fig. 7 dargestellte skelettartige Verstärkungseinlage 33 hat gegenüber den in den Fig. 2 und 6 dargestellten Ausführungsformen den Vorteil, dass der Armierungsteil für den verformbaren schlauchartigen Abschnitt aus geschlossenen Ringen 34 besteht, wodurch diesem Teil des Profilrahmens eine grössere Festigkeit und Formbeständigkeit erteilt wird.

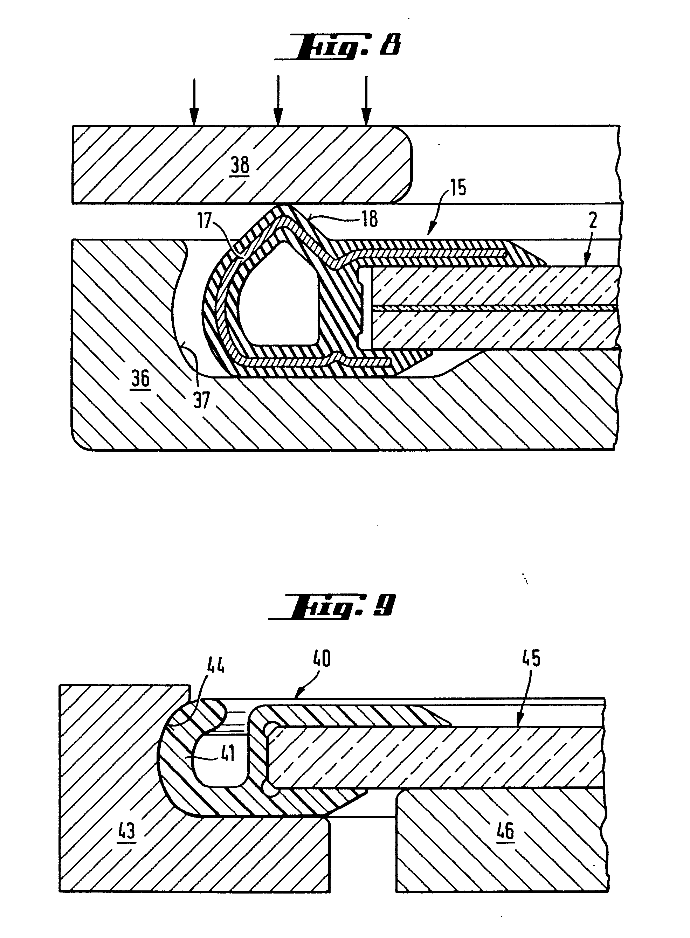

Auf welche Weise die endgültige Kalibrierung des Profilrahmens erfolgt, ist schematisch in den Fig. 8 und 9 dargestellt. Dabei handelt es sich bei der Ausführungsform nach Fig. 8 um die in Fig. 3 dargestellte umrahmte Glasscheibe 2, bei der der Umfang des Profilrahmens 15 dadurch vergrössert wird, dass der verformbare Hohlprofilabschnitt 17 in Richtung senkrecht zur Scheibenebene gestaucht wird. Zu diesem Zweck wird die zuvor mit dem Profilrahmen 15 umgebene Glasscheibe 2 in einem Formboden 36 eingelegt, der unterhalb des Profilrahmens 15 mit einer kalibrierten Vertiefung 37 versehen ist. Sodann wird ein Presswerkzeug 38 auf den Vorsprung 18 des Rahmenprofils so weit abgesenkt, bis der sich in Richtung der Scheibenebene ausdehnende Hohlprofilabschnitt 17 die gewünschten Aussenabmessungen angenommen hat.

In entgegengesetzter Weise lässt sich mit der in Fig. 9 dargestellten Anordnung der Profilrahmen durch nachträgliche plastische Verformung verkleinern. Zweckmässig kommt hierbei ein Rahmenprofil 40 zur Anwendung, das auf seiner Aussenseite einen hakenförmigen Profilabschnitt 41 aufweist. Wenigstens dieser hakenförmige Profilabschnitt 41 besteht aus thermoplastischem Kunststoff. Das Formwerkzeug 43 ist mit einer kalibrierten Vertiefung 44 versehen und beheizbar ausgebildet. Wenn die mit dem Profilrahmen 40 umgebene Glasscheibe 45 auf der Unterlage 46 positioniert ist, werden die einzelnen Teile des mehrteiligen Formwerkzeugs 43 in radialer Richtung, d.h. in Richtung der Scheibenebene, so weit gegen das Rahmenprofil 40 gepresst, bis die durch den Profilabschnitt 41 bestimmten Aussenabmessungen des Profilrahmens auf die gewünschte Grösse verringert sind.

## Patentansprüche

1. Verfahren zum Herstellen einer mit einem umlaufenden Profilrahmen versehenen, für die Verklebung mit dem Rahmen einer Fensteröffnung einer Fahrzeugkarosserie bestimmten Autoglasscheibe mit hoher Massgenauigkeit des Profilrahmens, die mit Hilfe eines zusätzlichen Kleberstrangs mit dem Rahmen der Fensteröffnung verklebt wird, dadurch gekennzeichnet, dass die Glasscheibe mit einem einen U-förmigen auf den Randbereich der Glasscheibe aufgeschobenen Profilabschnitt und einen ausserhalb des Umfangs der Glasscheibe angeordneten Profilabschnitt (6; 17; 22; 41) aufweisenden Profilrahmen versehen wird, dessen ausserhalb des Umfangs der Glasscheibe liegender Profilabschnitt (6; 17; 22; 41) aus plastisch verformbarem Werkstoff besteht, und dass mit Hilfe einer Rahmenpressvorrichtung der ausserhalb des Umfangs der Glasscheibe liegende Profilabschnitt derart gezielt plastisch verformt wird, dass die kalibrierten Aussenabmessungen der umrahmten Glasscheibe den jeweiligen Abmessungen der Fensteröffnung entsprechen.

2. Verfahren nach Anspruch 1, dadurch gekennzeichnet, dass ein Profilrahmen (1; 15; 25) verwendet wird, dessen ausserhalb des Umfangs der Glasscheibe liegender plastisch verformbarer Profilabschnitt (6; 17) aus einem Hohlprofilkörper mit einem metallischen Skelett (7; 10; 26; 34) und einem weichelastischen Werkstoff besteht.

3. Verfahren nach Anspruch 1, dadurch gekennzeichnet, dass ein Profilrahmen (20; 40) verwendet wird, dessen ausserhalb des Umfangs der Glasscheibe liegender plastisch verformbarer Profilabschnitt (22; 41) aus einem thermoplastischen Werkstoff besteht, der unter gleichzeitiger Wärmeeinwirkung auf die kalibrierten Aussenabmessungen plastisch verformt wird.

## Claims

1 A method of producing a glass vehicle window member with a section frame surround intended for bonding to the frame of a window aperture in a motor vehicle body, such frame surround having a high degree of accuracy, using an additional bonding strip for joining the window member to the frame of the window aperture, characterized in that the glass window member is fitted with a section frame having a channel section portion slipped over the marginal portion of the glass window member and a section portion (6; 17; 22; and 41) placed clear of the periphery of the glass window member, and the latter section portion (6; 17; 22 and 41) clear of the periphery of the window member is made of plastically deforming material, and in that with the aid of a frame pressing device the section portion clear of the periphery of the glass window member is so systematically plastically deformed that the precision-made external dimensions of the glass window member answer the respective dimensions of the window opening.

2 The method as claimed in claim 1 characterized in that a section frame (1; 15; and 25) is used whose plastically deforming section (6; and 17) clear of the periphery of the glass window member, is made up of a hollow section body with a metal skeleton (7; 10; 26; and 34) and a coating of a soft, elastic material.

3 The method as claimed in claim 1 characterized in that a section frame (20; and 40) is utilized, whose plastically deforming section portion (22; and 41) clear of the periphery of the glass window member is made of a thermoplastic material, which is plastically deformed with a simultaneous action of heat on the precision external dimensions.

## Revendications

1. Procédé pour fabriquer une vitre d'automobile pourvue d'un cadre profilé périphérique destinée à être collée à l'encadrement d'une baie de fenêtre d'une carrosserie de véhicule, avec une haute précision dimensionnelle du cadre profilé qui est collé à l'encadrement de la baie de fenêtre au moyen d'un boudin d'adhésif supplémentaire, caractérisé en ce que la vitre est pourvue d'un cadre profilé présentant une partie profilée en U glissée sur la zone marginale de la vitre et une partie profilée disposée à l'extérieur de la périphérie de la vitre (6, 17, 22, 41), la partie profilée (6, 17, 22, 41) disposée à l'extérieur de la périphérie de la vitre étant faite d'une matière plastiquement déformable et qu'à l'aide d'un dispositif de compression du cadre, on déforme plastiquement la partie profilée disposée à l'extérieur de la périphérie de la vitre d'une manière appropriée pour que les dimensions externes calibrées de la vitre encadrée correspondent chaque fois aux dimensions de la baie de fenêtre.

2. Procédé suivant la revendication 1, caractérisé en ce qu'on utilise un cadre profilé (1, 15, 25) dont la partie profilée plastiquement déformable (6, 17) située à l'extérieur de la périphérie de la vitre est constituée d'un corps profilé creux présentant un squelette métallique (7, 10, 26, 34) et un recouvrement en une matière souple.

3. Procédé suivant la revendication 1, caractérisé en ce qu'on utilise un cadre profilé (20, 40) dont la partie profilée plastiquement déformable (22, 41) située à l'extérieur de la périphérie de la vitre est faite d'une matière thermoplastique qui est déformée plastiquement aux dimensions externes calibrées sous l'effet d'une action thermique simultanée.

**Fig. 2**

**Fig. 1**

**Fig. 3**

**Fig. 4**

**Fig. 6**

**Fig. 5**

**Fig. 7**

## Fig. 8

## Fig. 9